# EUROPÄISCHE PATENTANMELDUNG

(11) **EP 1 669 617 A2**
(43) Veröffentlichungstag der Anmeldung: **14.06.2006**
(21) Anmeldenummer: 05026291.4
(22) Anmeldetag: 02.12.2005
(51) Int. Cl.: F16C 1/22

(54) **Einstelleinrichtung für biegsame Betätigungszüge**

(30) Priorität: 10.12.2004 DE 202004019234 U
(71) Anmelder: Dura Automotive Systems GmbH, 40549 Düsseldorf (DE)
(72) Erfinder: Vanselow, Ottwald, D-50170 Kerpen (DE); Nellen, Peter, D-47228 Duisburg (DE)
(74) Vertreter: Paul, Dieter-Alfred

(57) **Zusammenfassung**

Eine Einstelleinrichtung (1) für Betätigungszüge (11) weist einen Betätigungsmantel (10) und eine Betätigungsseele (8) und eine Spreizeinrichtung (2) auf, die ein äußeres Teleskopteil (3) und ein inneres Teleskopteil (4) hat, wobei die Telekopteile (3, 4) mittels einer Blokkiereinrichtung zueinander festlegbar sind, die ein komplementäres Eingriffspaar mit jeweils einem Eingriffselement (13, 14) an der Innenseite des äußeren Teleskopteils (3) und an der Außenseite des inneren Teleskopteils (4) hat, wobei die Eingriffselemente (13, 14) mittels einer Betätigungseinrichtung (18) aus einer Ausgangsstellung in eine die Teleskopierbeweglichkeit der Teleskopteile (3, 4) blockierende Eingriffsstellung bringbar sind und sich in Umfangsrichtung nur über einen Teil des jeweiligen Teleskopteils (3, 4) in der weise erstrecken, daß sich in der Ausgangsstellung Eingriffselemente (13, 14) in Umfangsrichtung hintereinander befinden, wobei durch die Betätigungseinrichtung (18) die Teleskopteile (3, 4) derart gegeneinander verdrehbar sind, daß die Eingriffselemente (13, 14) in Eingriff bringbar sind.

## Beschreibung

Die Erfindung betrifft eine Einstelleinrichtung für biegsame Betätigungszüge, die einen Betätigungsmantel und eine darin verschieblich geführte Betätigungsseele aufweist, mit folgenden Merkmalen:
- a): die Einstelleinrichtung weist eine Spreizeinrichtung auf;
- b): die Spreizeinrichtung weist ein äußeres Teleskopteil und ein darin axial bewegliches inneres Teleskopteil auf;
- c): durch beide Teleskopteile geht ein sich in Telekopierrichtung erstreckender Durchgangskanal für die Betätigungssseele;
- d): wenigstens eines der Teleskopteile hat eine Abstützfläche für den Betätigungsmantel;
- e): die Teleskopteile sind von einer Spreizfeder in austelekopierender Richtung beaufschlagt;
- f): die Telekopteile sind mittels einer Blockiereinrichtung in einer bestimmten Stellung zueinander festlegbar;
- g): die Blockiereinrichtung hat wenigstens ein komplementäres Eingriffspaar mit jeweils einem Eingriffselement an der Innenseite des äußeren Teleskopteils und an der Außenseite des inneren Teleskopteils;
- h): die Eingriffselemente eines Eingriffspaares sind mittels einer Betätigungseinrichtung aus einer Ausgangsstellung, in der sie sich nicht in Eingriff befinden, in eine die Teleskopierbeweglichkeit der Teleskopteile blockierende Eingriffsstellung bringbar.

Insbesondere bei Kraftfahrzeugen werden eine Reihe von Betätigungsfunktionen mit Hilfe von Betätigungszügen durchgeführt, da sie einfach und robust sind, ein geringes Gewicht haben und im Regelfall problemlos verlegt werden können. Dabei besteht ein Betätigungszug im Grundsatz aus zwei Teilen, nämlich einem schlauchförmigen Betätigungsmantel und einer darin geführten Betätigungsseele, die meiste als litzenartiger Drahtzug ausgebildet ist. An den beiden Enden des Betätigungsmantels steht die Betätigungsseele vor und hat dort Anschlußstücke, mit denen das eine Ende an einem Betätigungsorgan und das anderen Ende an einem zu betätigenden Organ befestigt werden kann.

Um die wirksame Länge des Betätigungsmantels an die jeweiligen Gegebenheiten anpassen zu können, sind solche Betätigungszüge mit Einstelleinrichtungen der eingangs genannten Art ausgebildet. Eine gattungsgemäße Einstelleinrichtung ist beispielsweise der DE 196 20 496 Al zu entnehmen. Bei ihr sind zwei hülsenförmige Teleskopteile ineinandergesteckt. An dem inneren Teleskopteil liegt stirnseitig das Ende des Betätigungsmantels an. Zwischen den beiden Teleskopteilen ist eine Spreizfeder angeordnet, die die Teleskopteile in austeleskopierender Richtung federbeaufschlagt.

An der Außenseite des inneren Teleskopteils und der Innenseite des äußeren Teleskopteils sind komplementäre Eingriffselemente in Form von Verzahnungen angeformt. Außenseitig ist das äußere Tele-skopteil von einer Betätigungshülse umgeben. Durch axiale Verschiebung der Betätigungshülse wird der mit der Verzahnung versehene Teil des äußeren Teleskopteils nach innen gestaucht, so daß die Verzahnung mit der komplementären Verzahnung auf dem inneren Teleskopteil in Eingriff kommt. Auf diese Weise können beide Teile axial gegenseitig fixiert werden.

Bei der Montage ist das innere Teleskopteil maximal in das äußere Teleskopteil eingeschoben und über die in Eingriff stehenden Verzahnungen fixiert. Nach Befestigung der Enden der Betätigungsseele an den zugehörigen Organen wird die Betätigungshülse zurückgeschoben, so daß die beiden Verzahnungen außer Eingriff kommen. Die Spreizfeder schiebt dann das innere Teleskopteil aus dem äußeren Teleskopteil so weit heraus, bis der Betätigungsmantel gespannt ist. Diese Stellung wird dann dadurch fixiert, daß die Betätigungshülse wieder in umgekehrter Richtung verschoben wird, so daß die beiden Verzahnungen erneut in Eingriff kommen.

Die bekannte Einstelleinrichtung ist relativ kompliziert aufgebaut. Ihre Fertigung ist deshalb aufwendig, und sie hat durch ihren Aufbau auch ein relativ hohes Gewicht.

Der Erfindung liegt somit die Aufgabe zugrunde, eine Einstelleinrichtung der eingangs genannten Art derart auszubilden, daß sie einen möglichst einfachen Aufbau hat und deshalb preiswert hergestellt werden kann und die ein geringes Gewicht hat.

Diese Aufgabe wird erfindungsgemäß durch eine Einstelleinrichtung mit folgenden Merkmalen gelöst:
- i): die Eingriffselemente des jeweiligen Eingriffspaares erstrecken sich in Umfangsrichtung nur über einen Teil des jeweiligen Teleskopteils in der Weise, daß sich in der Ausgangsstellung die Eingriffselemente in Umfangsrichtung hintereinander befinden;
- j): durch die Betätigungseinrichtung sind die Teleskopteile derart gegeneinander verdrehbar, daß die Eingriffselemente in Eingriff bringbar sind.

Grundgedanke der Erfindung ist es also, die beiden Eingriffselemente eines Eingriffspaares durch schlichtes Verdrehen der beiden Teleskopteile relativ zueinander in Eingriff zu bringen. Hierzu sind die beiden komplementären Eingriffselemente so ausgebildet, daß sie sich jeweils nur über einen Teil des Umfang des jeweiligen Teleskopteils erstrecken und in der Ausgangsstellung in Umfangsrichtung hintereinander liegen. Auf diese Weise ergibt sich ein gegenüber der bekannten Einstelleinrichtung sehr viel einfacherer Aufbau, so daß die Einstelleinrichtung kostengünstig und mit geringem Gewicht hergestellt werden kann.

Es versteht sich, daß statt eines Eingriffspaares auch mehrere, über den Umfang der Teleskopteile verteilte Eingriffspaare mit jeweils zwei komplementären Eingriffselementen vorgesehen sein können. Die Eingriffselemente können in an sich bekannter Weise als Verzahnungen ausgebildet sein.

In Ausbildung der Erfindung ist vorgesehen, daß die Betätigungseinrichtung als an einem der Teleskopteile angeformter Betätigungshebel ausgebildet ist, der zweckmäßigerweise radial nach außen vorsteht. Selbstverständlich können auch an beiden Teleskopteilen solche Betätigungshebel vorgesehen sein, um die Handhabung zu vereinfachen. Als zweckmäßig hat es sich erwiesen, die Betätigungseinrichtung an dem inneren Teleskopteil anzuordnen.

Vorteilhafterweise sind das innere Teleskopteil außenseitig und das äußere Teleskopteil innenseitig zylindisch ausgebildet. Dabei ist es zweckmäßig, wenn eines der Teleskopteile in Längsrichtung verlaufende Führungsstege aufweist, über die die Teleskopteile aneinander anliegen, so daß eine einwandfreie gegenseitige Führung erzielt wird.

Nach einem weiteren Merkmal der Erfindung ist vorgesehen, daß zwischen innerem und äußerem Teleskopteil eine Rasteinrichtung vorgesehen ist, die die Teleskopteile in der eingriffsstellung in Umfangsrichtung verrastet. Auf diese Weise ist gesichert, daß sich die beiden Teleskopteile nach Montage der Einstelleinrichtung nicht wieder voneinander lösen. Die Rasteinrichtung sollte dann derart ausgebildet sein, daß das innere Teleskopteil aus der Eingriffs- wieder in die Ausgangsstellung zurückdrehbar ist, d. h. der Widerstand soll einerseits so hoch sein, daß eine selbsttätige Verdrehung der beiden Teleskopteile vermieden wird, andererseits aber so niedrig, daß die beiden Teleskopteile von Hand wieder in die Ausgangsstellung gebracht werden können. Die Rasteinrichtung kann beispielsweise eine Kombination aus einem sich in Längsrichtung erstreckenden Federsteg am äußeren Teleskopteil und einem Raststeg am inneren Teleskopteil sein.

Schließlich ist nach der Erfindung vorgesehen, daß das äußere Teleskopteil derart ausgebildet ist, daß es drehfest an einem Halteorgan befestigbar ist. Hierzu kann das äußere Teleskopteil in dem Bereich, der für die Befestigung vorgesehen ist, asymmetrisch, eckig o. dgl. ausgebildet sein. Die drehfeste Verbindung zu dem Halteorgan ermöglicht es, die Eingriffsstellung durch Verdrehen des inneren Teleskopteils mit einer Hand zu erreichen.

In der Zeichnung ist die Erfindung anhand eines Ausführungsbeispiels näher veranschaulicht. Es zeigen:
- Figur 1: einen Längsschnitt durch die Einstelleinrichtung in Ausgangsstellung;
- Figur 2: einen Längsschnitt durch die Einstelleinrichtung gemäß Figur 1 in Eingriffsstellung;
- Figur 3: einen Querschnitt durch die Einstelleinrichtung gemäß Figur 1 in der Ebene A-A und
- Figur 4: einen Querschnitt durch die Einstelleinrichtung gemäß Figur 2 in der Ebene B-B.

Die in den Figuren dargestellte Einstelleinrichtung 1 weist eine Spreizeinrichtung 2 auf, deren wesentliche Teile ein äußeres Teleskopteil 3, ein inneres Teleskopteil 4 und eine Spreizfeder 5 sind.

Das äußere Teleskopteil 3 weist am vorderen, freien Ende eine Befestigungsnut 6 auf, die U-Form hat, also nicht über den gesamten Umfang des äußeren Teleskopteils 3 geht. Mit dieser Befestigungsnut 6 kann die Einstelleinrichtung 1 an einem Halteblech mit U-förmigem Ausschnitt eingesetzt werden. Auf diese Weise ist das äußere Teleskopteil 3 verdrehsicher gehalten.

In dem äußeren Teleskopteil 3 ist das innere Teleskopteil 4 verschieblich und drehbar geführt. Die Spreizfeder 5 stützt sich linksseitig an dem äußeren Teleskopteil 3 und rechtsseitig an dem inneren Teleskopteil 4 ab. Sie ist auf Druck beansprucht, so daß die beiden Teleskopteile 3, 4 in austeleskopierender Richtung federbeaufschlagt sind.

Die beiden Teleskopteile 3, 4 durchsetzen einen Durchgangskanal 7, in dem ein Betätigungsdraht 8 geführt ist. Er hat am freien Ende eine Verdickung 9, mit der der Betätigungsdraht 8 an einem Betätigungsorgan oder einem zu betätigenden Organ eingehängt werden kann. Zur anderen Seite hin ist der Betätigungsdraht 8 von einem schlauchförmigen, biegsamen Betätigungsmantel 10 umgeben, die beide zusammen einen Betätigungszug 11 bilden, welcher hier nur teilweise dargestellt ist, sich also nach rechts fortsetzt. Der Betätigungsmantel 10 greift in eine Bohrung 12 in dem inneren Telekopteil 4 ein und stützt sich stirnseitig an diesem ab.

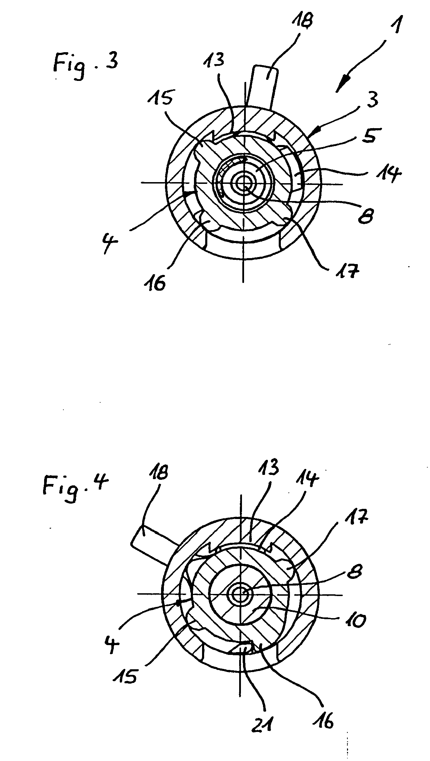

Das äußere Teleskopteil 3 hat innenseitig eine Verzahnung 13, die sich in Umfangsrichtung - wie insbesondere die Figuren 3 und 4 zeigen - nur über einen Bereich von ca. 30° erstreckt. Das innere Teleskopteil 4 hat auf der Außenseite eine komplementäre, sich nahezu über deren gesamten Länge erstreckende Verzahnung 14, die sich in Umfangsrichtung ebenfalls nur über ca. 30° erstreckt. Wie aus Figur 3 zu ersehen ist, befinden sich die beiden Verzahnungen 13, 14 in Umfangsrichtung hintereinander, sind also nicht in Eingriff, so daß das innere Teleskopteil 4 in das äußere Teleskopteil 3 einschiebbar ist. Die Führung des inneren Teleskopteils 4 in dem äußeren Teleskopteil 3 geschieht über in axialer Richtung verlaufenden Längsstegen 15, 16, 17, die an der Außenseite des inneren Teleskopteils 4 radial nach außen vorstehen. Das innere Teleskopteil 4 weist am außenliegenden freien Ende einen radial nach außen vorstehenden Betätigungshebel 18 auf, über den sich das innere Teleskopteil 4 relativ zu dem äußeren Teleskopteil 3 verdrehen läßt.

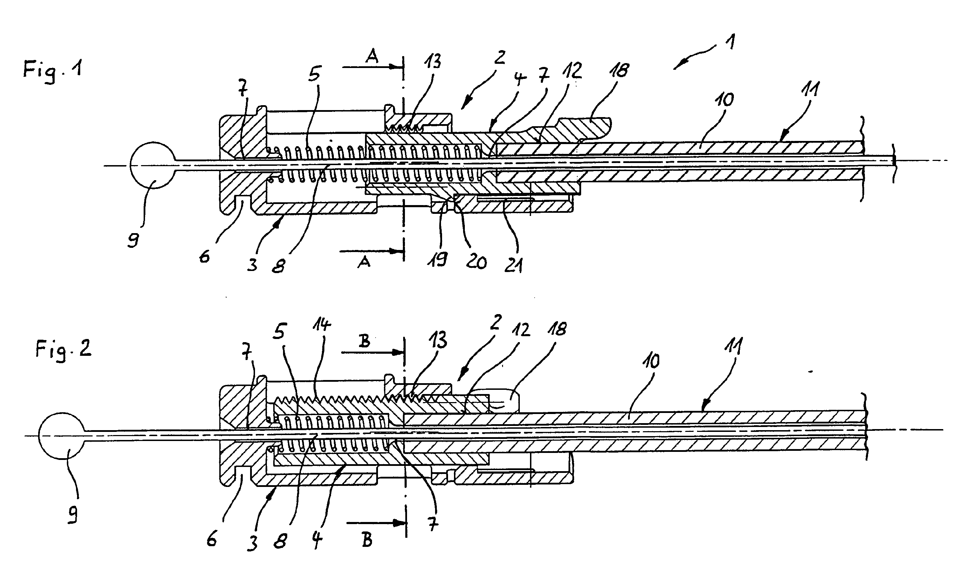

Für die Montage des Betätigungszugs 11 wird die Einstelleinrichtung 1 im Zustand gemäß den Figuren 1 und 3 angeliefert. Da die beiden Verzahnungen 13, 14 sich nicht in Eingriff befinden, sind die beiden Teleskopteile 3, 4 auseinanderteleskopiert, wobei das innere Teleskopteil 4 durch eine nach außen vorstehende Nase 19 daran gehindert wird, aus dem äußeren Teleskopteil 3 ausgestoßen zu werden. Die Nase 19 liegt an einem Anschlag 20 des äußeren Teleskopteil 3 an.

In einem ersten Schritt werden die Enden des Betätigungsdrahts 8 einerends mit dem zu betätigenden Organ und anderenends mit dem Betätigungsorgan gekuppelt. Dann wird das äußere Teleskopteil 3 so weit in Richtung auf das Teleskopteil 4 geschoben, bis es mit der Befestigungsnut 6 in die Ausnehmung des hier nicht dargestellten Halteblechs paßt, und es wird in diese Ausnehmung eingeschoben, so daß dann das äußere Teleskopteil 3 drehfest gehalten ist. Die Spreizfeder 5 drückt das innere Teleskopteil 4 gegen den Betätigungsmantel 10, so daß dieser gespannt wird.

Im Anschluß daran wird das innere Teleskopteil 4 über den Betätigungshebel 18 verdreht, und zwar in Bezug auf die Figuren 3 und 4 entgegen dem Uhrzeigersinn. Hierdurch kommt die Verzahnung 14 auf dem inneren Teleskopteil 4 in Eingriff mit der Verzahnung 13. Diese Stellung ist den Figuren 2 und 4 zu entnehmen. Aufgrund des Eingriffs der Verzahnungen 13, 14 sind die beiden Teleskopteile 3, 4 axial gegenseitig fixiert.

Bei der Verdrehung des inneren Teleskopteils 4 überfährt der Längssteg 16 eine Rastfeder 21, die sich innenseitig am äußeren Teleskopteil 3 in Längsrichtung erstreckt. Die Rastfeder 21 verhindert, daß sich das innere Teleskopteil 4 wieder im Uhrzeigersinn zurückdreht. Die Rastfeder 21 ist aber so elastisch, daß ein solches Zurückdrehen durch Betätigung des Betätigungshebels 18 von Hand möglich ist.

## Patentansprüche

1. Einstelleinrichtung (1) für biegsame Betätigungszüge (11), die einen Betätigungsmantel (10) und eine darin verschieblich geführte Betätigungsseele (8) aufweisen, mit folgenden Merkmalen:
a) Die Einstelleinrichtung (1) weist eine Spreizeinrichtung (2) auf;
b) die Spreizeinrichtung (2) weist ein äußeres Teleskopteil (3) und ein darin axial bewegliches inneres Teleskopteil (4) auf;
c) durch beide Teleskopteile (3, 4) geht ein sich in Telekopierrichtung erstreckender Durchgangskanal (7) für die Betätigungsseele (8);
d) wenigstens eines der Teleskopteile (4) hat eine Abstützfläche für den Betätigungsmantel (10);
e) die Teleskopteile (3, 4) sind von einer Spreizfeder (5) in austelekopierender Richtung beaufschlagt;
f) die Telekopteile (3, 4) sind mittels einer Blockiereinrichtung in einer bestimmten Stellung zueinander festlegbar;
g) die Blockiereinrichtung hat wenigstens ein komplementäres Eingriffspaar mit jeweils einem Eingriffselement (13, 14) an der Innenseite des äußeren Teleskopteils (3) und an der Außenseite des inneren Teleskopteils (4);
h) die Eingrifselemente (13, 14) eines Eingriffspaares sind mittels einer Betätigungseinrichtung (18) aus einer Ausgangsstellung, in der sie sich nicht in Eingriff befinden, in eine die Teleskopierbeweglichkeit der Teleskopteile (3, 4) blockierende Eingriffsstellung bringbar;
**gekennzeichnet durch** folgende Merkmale
i) die Eingriffselemente (13, 14) des jeweiligen Eingriffspaares erstrecken sich in Umfangsrichtung nur über einen Teil des jeweiligen Teleskopteils (3, 4) in der Weise, daß sich in der Ausgangsstellung Eingriffselemente in Umfangsrichtung hintereinander befinden;
j) **durch** die Betätigungseinrichtung (18) sind die Teleskopteile (3, 4) derart gegeneinander verdrehbar, daß die beiden Eingriffselemente (13, 14) in Eingriff bringbar sind.

2. Einstelleinrichtung nach Anspruch 1, **dadurch gekennzeichnet, daß** die Eingriffselemente als Verzahnungen (13, 14) ausgebildet sind.

3. Einstelleinrichtung nach Anspruch 1 oder 2, **dadurch gekennzeichnet, daß** die Betätigungseinrichtung (18) als an einem der Teleskopteile (3,4) angeformter Betätigungshebel (18) ausgebildet ist.

4. Einstelleinrichtung nach einem der Ansprüche 1 bis 3, **dadurch gekennzeichnet, daß** die Betätigungseinrichtung (18) an dem inneren Teleskopteil (4) angeordnet ist.

5. Einstelleinrichtung nach einem der Ansprüche 1 bis 4, **dadurch gekennzeichnet, daß** das innere Teleskopteil (4) außenseitig und das äußere Teleskopteil (3) innenseitig zylindisch ausgebildet sind.

6. Einstelleinrichtung nach Anspruch 5, **dadurch gekennzeichnet, daß** eines der Teleskopteile (4) in Längsrichtung verlaufende Führungsstege (15, 16, 17) aufweist, über die die Teleskopteile (3, 4) aneinander anliegen.

7. Einstelleinrichtung nach einem der Ansprüche 1 bis 6, **dadurch gekennzeichnet, daß** zwischen innerem und äußerem Teleskopteil (3, 4) eine Rasteinrichtung (17, 21) vorgesehen ist, in der die Teleskopteile (3, 4) in der Eingriffssstellung in Umfangsrichtung verrastet.

8. Einstelleinrichtung nach Anspruch 7, **dadurch gekennzeichnet, daß** die Rasteinrichtung (17, 21) derart ausgebildet ist, daß das innere Teleskopteil (4) aus der Eingriffs- wieder in die Ausgangsstellung zurückdrehbar ist.

9. Einstelleinrichtung nach Anspruch 7 oder 8, **dadurch gekennzeichnet, daß** die Rasteinrichtung einen in Längsrichtung sich erstreckenden Federsteg (21) am äußeren Teleskopteil (3) und einen Raststeg (17) am inneren Teleskopteil (4) aufweist.

10. Einstelleinrichtung nach einem der Ansprüche 1 bis 9, **dadurch gekennzeichnet, daß** das äußere Teleskopteil (3) derart ausgebildet ist, daß es drehfest an einem Halteorgan befestigbar ist.
